(19) Europäisches Patentamt
European Patent Office
Office européen des brevets

(11) **EP 4 207 658 B1**

(12) **EUROPEAN PATENT SPECIFICATION**

(45) Date of publication and mention
of the grant of the patent:
**18.03.2026 Bulletin 2026/12**

(21) Application number: **21859959.5**

(22) Date of filing: **15.07.2021**

(51) International Patent Classification (IPC):
*H04L 5/00* (2006.01)   *H04W 72/12* (2023.01)

(52) Cooperative Patent Classification (CPC):
**H04L 5/0051; H04L 5/006; H04L 5/0094;**
**H04L 5/0023**

(86) International application number:
**PCT/CN2021/106574**

(87) International publication number:
**WO 2022/042119 (03.03.2022 Gazette 2022/09)**

(54) **METHOD AND DEVICE FOR DYNAMIC SELECTION OF SRS TIME DOMAIN RESOURCE, STORAGE MEDIUM, AND ELECTRONIC DEVICE**

VERFAHREN UND VORRICHTUNG ZUR DYNAMISCHEN AUSWAHL VON SRS-ZEITBEREICHSRESSOURCEN, SPEICHERMEDIUM UND ELEKTRONISCHE VORRICHTUNG

PROCÉDÉ ET DISPOSITIF POUR LA SÉLECTION DYNAMIQUE DE RESSOURCE DE DOMAINE TEMPOREL DE SRS, SUPPORT D'ENREGISTREMENT ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2020 CN 202010881204**

(43) Date of publication of application:
**05.07.2023 Bulletin 2023/27**

(73) Proprietor: **ZTE Corporation**
**Shenzhen, Guangdong 518057 (CN)**

(72) Inventors:
• **FU, Ruiying**
**Shenzhen, Guangdong 518057 (CN)**
• **YAO, Chunfeng**
**Shenzhen, Guangdong 518057 (CN)**

(74) Representative: **Novagraaf Technologies**
**2 rue Sarah Bernhardt**
**CS90017**
**92665 Asnières-sur-Seine Cedex (FR)**

(56) References cited:
**WO-A1-2019/031816    WO-A1-2020/164386**
**CN-A- 101 500 242    CN-A- 106 992 804**

**CN-A- 109 565 840    US-A1- 2015 305 027**

• **POTEVIO: "Proposal for an Enhanced SRS Scheme for CoMP", 3GPP DRAFT; R1-100616, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050418221**
• **ZTE, ZTE MICROELECTRONICS: "Discussion on SRS design for NR", 3GPP DRAFT; R1-1701818 DISCUSSION ON SRS DESIGN FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20170213 - 20170217, 7 February 2017 (2017-02-07), Mobile Competence Centre ; 650, route des Lucioles ; F-06921 Sophia-Antipolis Cedex ; France , XP051220884**

- HUAWEI, HISILICON: "Enhancements on SRS for Rel-17", 3GPP DRAFT; R1-2005247, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20200817 - 20200828, 8 August 2020 (2020-08-08), Mobile Competence Centre ; 650, route des Lucioles ; F-06921 Sophia-Antipolis Cedex ; France
, XP051917295

- MODERATOR (ZTE): "FL summary on SRS enhancements", 3GPP DRAFT; R1-2007076, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. eMeeting; 20200817 - 20200828, 25 August 2020 (2020-08-25), Mobile Competence Centre ; 650, route des Lucioles ; F-06921 Sophia-Antipolis Cedex ; France
, XP051921421

**Description**

**Technical Field**

Embodiments of the present invention relate to the field of communications, and in particular to a method and device for dynamic selection of a Sounding Reference Signal (SRS) time-domain resource, a storage medium, and an electronic device.

**Background**

Sounding Reference Signal (SRS) plays an important role in a Long Term Evolution (LTE)/New Radio (NR) system. For uplink, SRS is mainly used for measuring the state of an uplink channel, so that the uplink Modulation and Coding Scheme (MCS) can be determined. For downlink, SRS is mainly used for acquiring a downlink beam forming weight in an uplink and downlink reciprocity system. For example, a downlink beam forming weight may be acquired based on SRS-based channel estimation by virtue of the reciprocity characteristic of uplink and downlink channels in a Time Division Duplex (TDD) system. The accuracy and timeliness of SRS-based channel estimation have an influence on the uplink and downlink system performance.

A symbol that can be used to send the SRS is defined in the 3rd-Generation Partnership Project (3GPP) protocol, for example, the SRS may be allocated on uplink symbols of special (S) subframes in the LTE system, and may also be allocated on a part of symbols of uplink (U) subframes (for example, the last symbol of the U subframes).

The selection of SRS time-domain symbols of a cell can greatly affect the uplink and downlink system performance.

The interference (NI) on different symbols bearing the SRS may be different. In particular, in an area where an atmospheric waveguide is severe, the present cell may be affected by the downlink of a remote cell, and according to the characteristics of the atmospheric waveguide interference, the interference on the S subframes may be far higher than the interference on the U subframes. Even if there is no atmospheric waveguide, the interference degree on respective symbols is different due to the complicated network environment and different situations of adjacent cells. The interference level on an SRS symbol affects the accuracy of SRS-based channel estimation, and the larger the interference is, the lower the accuracy of the SRS-based channel estimation will be, and the worse the uplink and downlink system performance will be.

The number of SRS time-domain symbols affects SRS capability and SRS period. The larger the number of available time-domain symbols for SRS, the larger the SRS capability or the smaller the SRS period. The SRS capability refers to the number of users which can support the configuration of an SRS. If a user is not configured with SRS, with regard to an uplink user, the acquisition of channel quality information is affected; and with regard to a downlink user, a beamforming gain cannot be acquired since a Beam Forming (BF) transmission scheme cannot be used, and in particular, there is a relatively large performance loss for a large-scale multi-antenna system (Massive MIMO). The magnitude of the SRS period will influence the time-effectiveness of SRS. The larger the SRS period is, the longer the time required for acquiring the uplink channel state information and the downlink beam forming weight will be, and the worse the corresponding performance will be.

If the SRS is allowed to be allocated on the U subframes, the number of SRS time-domain symbols will increase, but the number of available symbols of the uplink service channel (for example, the Physical Uplink Shared Channel (PUSCH)) will be reduced, resulting in an increase in the uplink code rate and a decrease in the throughput.

Based on the above analysis, it can be concluded that how to reasonably select a cell SRS time-domain symbol resource plays an important role in improving system performance.

A related SRS resource allocation scheme mainly allocates different resource sets to different adjacent cells considering inter-cell resource coordination (or a Comp UE resource stagger), thereby reducing inter-cell SRS interference. The problems of these technical schemes lie in the following aspects: these technical schemes mainly consider inter-cell interference coordination, and in a case where non-inter-cell interference is dominant, for example, in a case where an atmospheric waveguide is severe, the difference between different symbol interference situations is not considered during cell SRS time-domain resource selection, which will cause degradation of system performance; in addition, the relevant schemes do not comprehensively evaluate the influence of SRS interference and the number of SRS symbols, etc. on uplink and downlink system performance.

To sum up, in the related art, when selecting a cell SRS time-domain resource, the influence of a difference in interference levels on different SRS symbols caused by different interference situations including, for example, an atmospheric waveguide, etc. on resource selection is not taken into consideration, which causes unreasonable selection of the cell SRS time-domain resource, and further causes low uplink and downlink system performance.

US2015/305027A1 relates to configuring sounding reference signal resource of cooperating cells, specifically by reconfiguring allocated SRS resources according to an SRS initial time domain resource configuration order.

CN101500242A relates to an SRS configuration device, and the SRS configuration device can configure the symbol positions occupied by the SRS in each cell in the UpPTS according to three different methods.

## Summary

Embodiments of the present invention provide a method and device for dynamic selection of an SRS time-domain resource, a storage medium, and an electronic device, which may at least solve the problem in the related art of low uplink and downlink system performance caused by unreasonable selection of a cell SRS time-domain resource.

The present invention is set out in the appended set of claims.

According to an embodiment of the present invention, provided is a method for dynamic selection of an SRS time-domain resource, the method being performed by an electronic device and including: acquiring a current SRS time-domain resource configuration and at least one candidate SRS time-domain resource configuration, wherein the current SRS time-domain resource configuration is a time-domain symbol resource configuration being used, wherein the SRS time-domain resource configuration is used for sending or receiving SRS; determining a first performance parameter of the current SRS time-domain resource configuration and a second performance parameter of each of the at least one candidate SRS time-domain resource configuration according to first measurement information, wherein the first performance parameter is used for representing system performance under the current SRS time-domain resource configuration, the second performance parameter is used for representing system performance under the candidate SRS time-domain resource configuration, and the first measurement information includes an interference influence factor on an SRS symbol; and in a case where at least one target SRS time-domain resource configuration exists in the at least one candidate SRS time-domain resource configuration, replacing the current SRS time-domain resource configuration with one SRS time-domain resource configuration in the at least one target SRS time-domain resource configuration, wherein the second performance parameter of each of the at least one target SRS time-domain resource configuration is greater than a product of the first performance parameter and a preset ratio, and the preset ratio is greater than 1.

The interference influence factor in the embodiments of the present invention may be a measured value of interference influence or a pre-estimated value of interference influence.

According to another embodiment of the present invention, provided is a device for dynamic selection of an SRS time-domain resource, including: a first acquisition unit, configured to acquire a current SRS time-domain resource configuration and at least one candidate SRS time-domain resource configuration, wherein the current SRS time-domain resource configuration is a time-domain symbol resource configuration being used; a determination unit, configured to determine a first performance parameter of the current SRS time-domain resource configuration and a second performance parameter of each of the at least one candidate SRS time-domain resource configuration according to first measurement information, wherein the first performance parameter is used for representing system performance under the current SRS time-domain resource configuration, the second performance parameter is used for representing system performance under the candidate SRS time-domain resource configuration, and the first measurement information includes an interference influence factor on an SRS symbol; and a replacement unit, configured to, in a case where at least one target SRS time-domain resource configuration exists in the at least one candidate SRS time-domain resource configuration, replace the current SRS time-domain resource configuration with one SRS time-domain resource configuration in the at least one target SRS time-domain resource configuration, wherein the second performance parameter of each of the at least one target SRS time-domain resource configuration is greater than a product of the first performance parameter and a preset ratio, and the preset ratio is greater than 1.

According to yet another embodiment of the present invention, also provided is a computer-readable storage medium. The computer-readable storage medium stores a computer program, wherein the computer program is configured to execute the operations in any one of the method embodiments when running.

According to yet another embodiment of the present invention, also provided is an electronic device, including a memory and a processor, wherein the memory stores a computer program, and the processor is configured to run the computer program so as to execute the operations in any one of the method embodiments.

By means of the embodiments of the present invention, in the process of selecting a time-domain resource, a first performance parameter and a second performance parameter are calculated based on an interference influence factor on an SRS symbol, so that the influence of a difference in interference levels on different SRS symbols caused by different interference situations including, for example, an atmospheric waveguide, etc. on resource selection is considered. On the basis that the difference in interference levels on different symbols is considered, the performance of SRS time-domain resource allocation is also comprehensively evaluated in combination with parameters such as available SRS symbols, an SRS capability and an SRS period. Therefore, the problem in the related art of low uplink and downlink system performance caused by unreasonable selection of a cell SRS time-domain resource can be solved, thereby achieving the effect of improving the uplink and downlink system performance.

## Brief Description of the Drawings

Fig. 1 is a hardware structure block diagram of a mobile terminal for implementing a method for dynamic selection of an SRS time-domain resource according to an embodiment of the present invention;

Fig. 2 is a flowchart of a method for dynamic selection of an SRS time-domain resource according to an embodiment of the present invention;

Fig. 3 is a flowchart of a method for dynamic selection of an SRS time-domain resource according to an embodiment of the present invention;

Fig. 4 is a structure diagram of a device for dynamic selection of an SRS time-domain resource according to an embodiment of the present invention;

Fig. 5 is a structure diagram of a device for dynamic selection of an SRS time-domain resource according to an embodiment of the present invention;

Fig. 6 is a structure diagram of a device for dynamic selection of an SRS time-domain resource according to an embodiment of the present invention; and

Fig. 7 is a structure diagram of a device for dynamic selection of an SRS time-domain resource according to an embodiment of the present invention.

## Detailed Description

Hereinafter, the embodiments of the present invention will be described in detail with reference to the accompanying drawings and in conjunction with the embodiments.

It should be noted that, terms such as "first" and "second" in the description, claims, and the accompanying drawings of the present invention are used to distinguish similar objects, but are not necessarily used to describe a specific sequence or order.

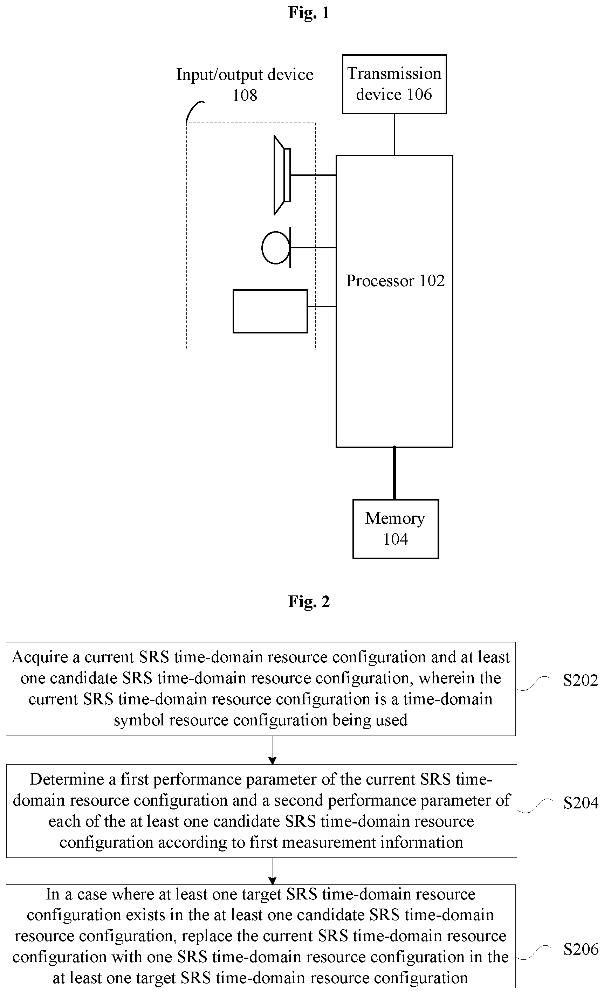

The method embodiments provided in the embodiments of the present invention may be implemented in a mobile terminal, a computer terminal, or a similar computing device. Taking operation on a mobile terminal as an example, Fig. 1 is a hardware structure block diagram of a mobile terminal for implementing a method for dynamic selection of an SRS time-domain resource according to an embodiment of the present invention. As shown in Fig. 1, the mobile terminal may include one or more (only one is shown in Fig. 1) processors 102 (the processors 102 may include, but are not limited to, a processing device such as a microprocessor (for example, an MCU) or a programmable logic device (for example, an FPGA)) and a memory 104 for storing data. The mobile terminal may further include a transmission device 106 and an input/output device 108 for a communication function. A person having ordinary skill in the art may understand that the structure shown in Fig. 1 is merely exemplary, and does not limit the structure of the foregoing mobile terminal. For example, the mobile terminal may further include more or less components than shown in Fig. 1, or have a different configuration from that shown in Fig. 1.

The memory 104 may be configured to store a computer program, for example, a software program and modules of application software, for example, a computer program corresponding to the method for dynamic selection of an SRS time-domain resource in the embodiments of the present invention. The processor 102 runs the computer program stored in the memory 104, so as to execute various function applications and data processing, that is, to implement the foregoing method. The memory 104 may include high-speed random access memory, and may also include non-volatile memory, such as one or more magnetic storage devices, flash memory, or other non-volatile solid-state memory. In some instances, the memory 104 may further include memory remotely located with respect to the processor 102, which may be connected to the mobile terminal over a network. Examples of such network include, but are not limited to, the Internet, an intranet, a local area network, a mobile communication network, and combinations thereof.

The transmission device 106 is configured to receive or transmit data via a network. Specific examples of the described network may include a wireless network provided by a communication provider of the mobile terminal. In an example, the transmission device 106 may include a Network Interface Controller (NIC) that may be coupled to other network devices via a base station to communicate with the Internet. In an example, the transmission device 106 may be a Radio Frequency (RF) module for communicating wirelessly with the Internet.

Fig. 2 is a flowchart of a method for dynamic selection of an SRS time-domain resource according to an embodiment of the present invention. As shown in Fig. 2, the flow includes the following operations.

At S202, a current SRS time-domain resource configuration and at least one candidate SRS time-domain resource configuration are acquired, wherein the current SRS time-domain resource configuration is a time-domain symbol resource configuration being used.

At S204, a first performance parameter of the current SRS time-domain resource configuration and a second performance parameter of each of the at least one candidate SRS time-domain resource configuration are determined according to first measurement information, wherein the first performance parameter is used for representing system performance under the current SRS time-domain resource configuration, the second performance parameter is used for representing system performance under the candidate SRS time-domain resource configuration, and the first measurement information includes an interference influence factor on an SRS symbol.

At S206, in a case where at least one target SRS time-domain resource configuration exists in the at least one candidate SRS time-domain resource configuration, the current SRS time-domain resource configuration is replaced with one SRS time-domain resource configuration in the at least one target SRS time-domain resource configuration, wherein the second performance parameter of each of the at least one target SRS time-domain resource configuration is greater than a product of the first performance parameter and a preset ratio, and the preset ratio is greater than 1.

After determining the first performance parameter of the current SRS time-domain resource configuration and the second performance parameter of each of the at least one candidate SRS time-domain resource configuration according to the first measurement information, the method may further include the following operation. The current SRS time-domain resource configuration is kept unchanged in a case where the target SRS time-domain resource configuration does not exist in the at least one candidate SRS time-domain resource configuration.

Before determining the first performance parameter of the current SRS time-domain resource configuration and the second performance parameter of each of the at least one candidate SRS time-domain resource configuration according to the first measurement information, the method may further include an operation of acquiring the first measurement information.

The operation of acquiring the first measurement information includes an operation of acquiring a total number of Radio Resource Control (RRC) connected users in a cell, an uplink reference spectrum efficiency of each user, a downlink reference spectrum efficiency of each user, an uplink spectrum efficiency weighting factor of each user, a downlink spectrum efficiency weighting factor of each user, an interference influence factor of SRS interference on uplink performance, and an interference influence factor of SRS interference on downlink performance.

After acquiring the first measurement information, the method may further include an operation of calculating the first performance parameter or the second performance parameter based on Formula 1 to Formula 3.

The operation of acquiring the first measurement information includes an operation of acquiring a total number of RRC connected users in a cell, an influence factor of the number of uplink symbols on an uplink system, an uplink reference spectrum efficiency of each user, an uplink spectrum efficiency weighting factor of each user, an influence factor of SRS interference on uplink performance, an influence factor of SRS capability on the uplink performance, an influence factor of SRS period on the uplink performance, a downlink reference spectrum efficiency of each user, an downlink spectrum efficiency weighting factor of each user, an influence factor of the SRS interference on downlink performance, an influence factor of the SRS capability on the downlink performance, an influence factor of the SRS capability on the downlink performance, and an influence factor of the SRS period on the downlink performance, wherein the SRS capability refers to the number of users supporting configuration of SRS.

After acquiring the first measurement information, the method may further include an operation of determining the first performance parameter or the second performance parameter based on Formula 4 to Formula 6.

The first measurement information in the embodiments of the present invention may be the total number of the RRC connected users in the cell, the uplink reference spectrum efficiency of each user, the downlink reference spectrum efficiency of each user, the uplink spectrum efficiency weighting factor of each user, the downlink spectrum efficiency weighting factor of each user, the interference influence factor of the SRS interference on the uplink performance, and the interference influence factor of the SRS interference on the downlink performance. When calculating the first performance parameter, the value of the first measurement information may be a measurement value and may also be a pre-estimated value. When calculating the second performance parameter, the value of the first measurement information may be a measurement value and may also be a pre-estimated value.

The first measurement information in the embodiments of the present invention may be the total number of the RRC connected users in the cell, the influence factor of the number of uplink symbols on the uplink system, the uplink reference spectrum efficiency of each user, the uplink spectrum efficiency weighting factor of each user, the influence factor of the SRS interference on the uplink performance, the influence factor of the SRS capability on the uplink performance, the influence factor of the SRS period on the uplink performance, the downlink reference spectrum efficiency of each user, the downlink spectrum efficiency weighting factor of each user, the influence factor of the SRS interference on the downlink performance, the influence factor of the SRS capability on the downlink performance, the influence factor of the SRS capability on the downlink performance, and the influence factor of the SRS period on the downlink performance, wherein the SRS capability refers to the number of users supporting configuration of SRS. When calculating the first performance parameter, the value of the first measurement information may be a measured value or a pre-estimated value. When calculating the second performance parameter, the value of the first measurement information may be a measured value or a pre-estimated value.

The operation of acquiring the candidate SRS time-domain resource configuration may include the following operations. All available SRS symbols are acquired; any SRS symbol among all the available SRS symbols is determined as a candidate SRS time-domain resource configuration; and any at least two SRS symbols among all the available SRS symbols are determined as a candidate SRS time-domain resource configuration.

By means of the operations, the problem in the related art of low uplink and downlink system performance caused by unreasonable selection of a cell SRS time-domain resource is solved, thereby achieving the effect of improving the uplink and downlink system performance.

The above method for dynamic selection of an SRS time-domain resource is explained below with reference to a specific example.

The core inventive concept of the present invention includes evaluating the influence of various SRS time-domain resource schemes on the uplink and downlink system performance according to the interference situations on different SRS symbols, and dynamically selecting SRS time-domain symbols.

Since the number of uplink symbols occupied by SRS and the number of available SRS symbols also influence system performance, in addition to considering SRS interference on different symbols, uplink performance and downlink performance are comprehensively evaluated according to the number of uplink symbols occupied by SRS and the number of available SRS symbols, and a scheme with optimal comprehensive performance is selected.

A cell SRS resource evaluation function is denoted as $G(f_{UL}, f_{DL})$, where $f_{UL}$ is an uplink performance evaluation function, and is related to interference (NI) on an SRS symbol, the number of uplink symbols occupied by an SRS, an SRS capability or an SRS period, etc., and an expression for $f_{UL}$ is $f_{UL}(UpSymNum, NI, Capability, SrsPeriod)$ ; $f_{DL}$ is a downlink throughput evaluation function, and is related to interference (NI) on an SRS symbol, an SRS capability or an SRS period, and an expression for $f_{DL}$ is $f_{DL}(NI, Capability, SrsPeriod)$.

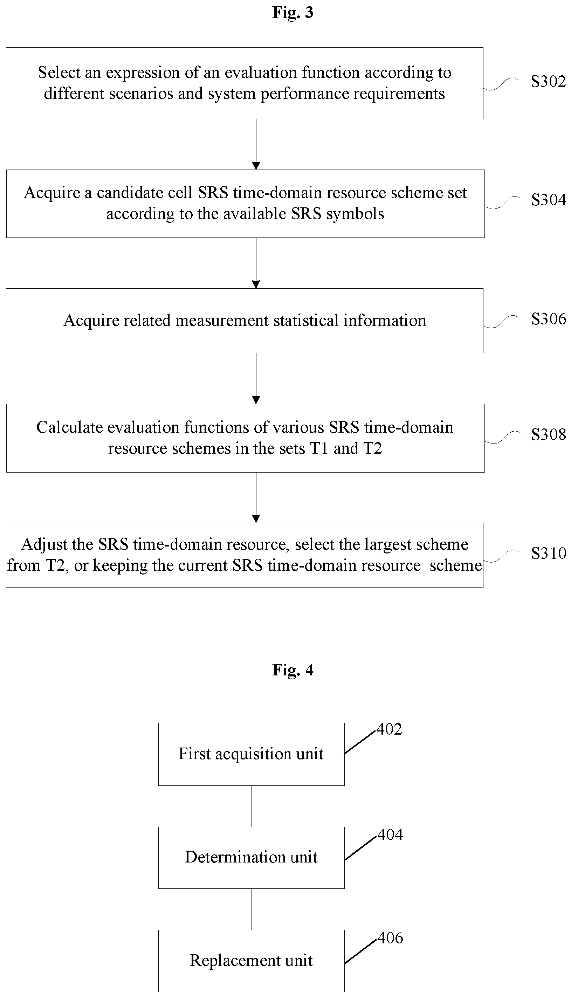

The method for dynamic selection of an SRS time-domain resource in a cell in the embodiments of the present invention includes the following operations as shown in Fig. 3.

At S302, an expression of an evaluation function is selected according to different scenarios and system performance requirements. For example, in a system having higher requirements on the downlink performance, an evaluation function with a weight coefficient of $f_{DL}$ far greater than a weight coefficient of $f_{UL}$. An influence of interference (NI), SRS capability, SRS period, and the like on the uplink and downlink system may be determined through simulation or field test.

At S304, a candidate cell SRS time-domain resource scheme set is acquired according to the available SRS symbols.

T1 denotes the current SRS time-domain resource scheme set.

T2 denotes other candidate SRS time-domain resource scheme sets except the current SRS time-domain resource scheme.

At S306, related measurement statistical information, such as an interference measurement quantity on an SRS symbol and basic statistical information of a network, is acquired. For example, the information such as SRS capability and SRS period is determined according to the number of SRS symbols in various SRS time-domain resource schemes in sets T1 and T2.

At S308, evaluation functions $f_{UL}(UpSymNum, NI, Capability, SrsPeriod)$, $f_{DL}(NI, Capability, SrsPeriod)$ and $G(f_{UL}, f_{DL})$ of various SRS time-domain resource schemes in the sets T1 and T2 are calculated according to the information acquired at S306.

At S310, if $G(f_{UL}, f_{DL})$ of the SRS time-domain resource allocation scheme in T2 is greater than a product of alfa and $G(f_{UL}, f_{DL})$ of the corresponding SRS time-domain resource allocation scheme in T1, the SRS time-domain resource is adjusted, and a scheme with a maximum value of $G(f_{UL}, f_{DL})$ is selected from T2; otherwise, the current SRS time-domain resource allocation scheme is kept unchanged. Here, alfa is a lag factor and may be determined by comprehensively considering the system performance and the reconfiguration overhead.

By means of the method of the embodiments of the present invention, compared with the related art, the influence on the uplink and downlink system performance is comprehensively evaluated according to the interference on an SRS symbol, and in addition, the influence on the uplink and downlink system performance is comprehensively evaluated according to basic statistical information of a network, the number of U subframes occupied by an SRS, an SRS capability and an SRS period, and a cell SRS time-domain resource allocation scheme with the maximum spectrum efficiency is selected, so that the performance of the system can be improved.

As an exemplary embodiment, the uplink and downlink system performance is evaluated primarily based on the interference levels on different SRS symbols.

At operation 1, an evaluation function is set according to the degree of concern of different scenarios on the uplink and downlink performance, for example, the evaluation function is set as $G(f_{UL}, f_{DL}) = a^*f_{UL}(NI) + b^*f_{DL}(NI)$. Wherein:

$$f_{ul}(NI) = \sum_{i=1}^{RRC} \beta(i) * SE_{ul}(i) * \xi_{ul}(NI(i))$$

$$f_{DL}(NI) = \sum_{i=1}^{RRC} \partial(i) * SE_{dl}(i) * \xi_{dl}(NI(i))$$

where a+b=1, for example, a=0.2, and b=0.8 in the present embodiment.

1) $_{RRC}$ denotes a total number of RRC connected users in a cell.

2) $SE_{ul}(i)$ and $SE_{dl}(i)$ respectively denote an uplink reference spectrum efficiency and a downlink reference spectrum efficiency of user i, which, in an example, may refer to uplink spectrum efficiency and downlink spectrum efficiency of user i when NI =-110 dBm, and may be respectively acquired according to uplink and downlink MCSs and statistical information of a UE.

3) $\beta(i)$ and $\partial(i)$ respectively denote an uplink spectrum efficiency weighting factor and a downlink spectrum efficiency weighting factor of user i, which may be acquired by collecting statistics of spectrum efficiency distribution and scheduling ratios of users in a network.

4) $\xi_{ul}(t)$ is an influence factor of SRS interference on uplink performance, which may be determined according to tests or simulations, and is assumed to take the following values in this embodiment:

$$\xi_{ul}(t) = \begin{cases} 1 & t <= -100 \\ 0.9 & -100 < t <= -90 \\ 0.85 & t > -90 \end{cases} ;$$

5) $\xi_{dl}(t)$ is an influence factor of SRS interference on downlink performance, wherein the influence factor of interference on a downlink BF user may be acquired through simulation or test, and $\xi_{dl}(t)$ is assumed to take the following values in this embodiment:

for BF users, $$\xi_{dl}(t) = \begin{cases} 1 & t <= -110 \\ 0.85 & -110 < t <= -100 \\ 0.75 & -100 < t <= -90 \\ 0.6 & t > -90 \end{cases} ;$$

for non-BF users, $\xi_{dl}(t) = 1$.

At operation 2, a candidate cell SRS time-domain resource scheme set is acquired according to the total available SRS symbols.

For the TDD uplink-downlink ratio of 2, the cell SRS time-domain resource is selected taking 5ms as a reference period, and the total available SRS symbols are respectively S1, S2, AND U1.

S1 and S2 denote the first uplink symbol and the second uplink symbol of the S subframes, and U1 denotes the last symbol of the U subframes.

The current SRS time-domain resource scheme set T1 =S1 +S2.

The candidate SRS time-domain resource scheme sets T2 are:

$$T2(1)=S1+S2+U1, T2(2)=S1+U1, T2(3)=S2+U1, T2(4)=S1, T2(5)=S2, T2(6)=U1.$$

At operation 3, relevant measurement statistical information, which includes an interference situation of each symbol and basic statistical information of a network, is acquired, and information of each user is determined for each SRS time-domain resource scheme. The following information is mainly determined:

the number of RRC connected users in the network, assuming that there are 200 users in the network;

interference situations on each SRS symbol;

reference spectrum efficiencies $SE_{ul}(i)$ and $SE_{dl}(i)$ of each UE in the network;

a weighting factor $\beta(i)$ of each user acquired according to the distribution and scheduling ratio of the uplink SE in the network; and

a weighting factor $\partial(i)$ of each user acquired according to the distribution and scheduling ratio of the downlink SE in the network.

Under the time-domain resource allocation schemes of T1, T2(1)~T2(6), an SRS resource is pre-allocated to UE, and an SRS resource allocation situation of each UE under each scheme is determined.

At operation 4, the evaluation functions $f_{UL}(NI)$ , $f_{DL}(NI)$ and $G(f_{UL},f_{DL})$ corresponding to T1, T2(1)~T2(6) are respectively calculated by substituting the information acquired in operation 3 into the evaluation function determined in operation 1.

It is assumed that the values of the evaluation function $G(f_{UL},f_{DL})$ corresponding to T1 and T2(1)~T2(6) acquired by calculation are 300, 280, 270, 320, 240, 250 and 300 respectively.

At operation 5, assuming that the value of alfa is 1.1, the value of $G(f_{UL},f_{DL})$ corresponding to T2(3) in T2(1)~T2(6) is the largest and is equal to 320, and the value of $G(f_{UL},f_{DL})$ corresponding to T2(3) is less than the product of alfa and $G(f_{UL},f_{DL})$ corresponding to T1, which is equal to 1.1*300, thus the SRS time-domain symbol resource scheme corresponding to T1 is selected, i.e., the current SRS time domain scheme is kept unchanged.

As another example, the uplink and downlink system performance is comprehensively evaluated according to the interference levels on different SRS symbols, the number of uplink symbols occupied by SRS and the number of available SRS symbols.

At operation 1, an evaluation function is set according to the degree of concern of different scenarios on the uplink and downlink performance, for example, the evaluation function is set as $G(f_{UL},f_{DL})=a*f_{UL} +b*f_{DL}(NI,Capability,SrsPeriod)$.

Wherein: a+b=1, for example, a=0.4, and b=0.6 in the present embodiment.

The uplink system performance is mainly related to the number of uplink available symbols except SRS symbols, SRS NI, SRS capability and SRS period.

The expression of $f_{UL}(UpSymNum,NI,Capability,SrsPeriod)$ is as follows:

$$f_{UL}(UpSymNum, NI, Capability, SrsPeriod) =$$
$$\sum_{i=1}^{RRC} \beta(i) * SE_{ul}(i) * \theta_{ul}(UpSymNum) * \xi_{ul}(NI(i)) * \delta_{ul}(Capability(i)) * \varphi_{ul}(SrsPeriod(i))$$

wherein:

$_{RRC}$ denotes a total number of RRC connected users in a cell.
$\theta_{ul}(UpSymNum)$ denotes an influence factor of the number of uplink symbols on an uplink system, and is set as

$$\theta_{ul}(UpSymNum) = \frac{UpSymNum}{TotalUpSym}$$ , wherein $UpSymNum$ is the number of uplink available symbols except SRS symbols, and $TotalUpSym$ is the total number of uplink available symbols. When the SRS occupies the symbols of the U subframes, the number of the uplink symbols will be reduced, which has an influence on the uplink throughput; and when the SRS occupies the S subframes, the SRS will not occupy the uplink symbols, and will not affect the uplink throughput.

$SE_{ul}(i)$ denotes an uplink reference spectrum efficiency of user i, which refers to the uplink spectrum efficiency of user i when $UpSymNum=TotalUpSym,$ NI =-110dBm, the SRS resource is configured, and the SRS period is 5ms, and the uplink reference spectrum efficiency may be acquired according to the MCS or statistical information of the UE.

$\beta(i)$ denotes an upstream spectrum efficiency weighting factor of user i, which may be acquired by collecting statistics of the upstream spectrum efficiency distribution and the upstream scheduling ratios of the users in the network.

$\xi_{ul}(t)$ denotes an influence factor of SRS interference on uplink performance, which may be determined according to tests or simulations, and is assumed to take the following values in this embodiment:

$$\xi_{ul}(t) = \begin{cases} 1 & t <= -100 \\ 0.9 & -100 < t <= -90 \\ 0.8 & t > -90 \end{cases}$$

.

$\delta_{ul}(Capability(i))$ denotes an influence factor of the SRS capability on the uplink performance, and is set as:

for a user configuring SRS, $\delta_{ul}(Capability(i)) = 1$;
for a user without SRS, $\delta_{ul}(Capability(i)) = 0.9$.
$\phi_{ul}(SrsPeriod(i))$ denotes an influence factor of the SRS period on the uplink performance, and it is assumed that the uplink has no requirement on the SRS period, i.e. $\phi_{ul}(SrsPeriod(i)) = 1$.

The downlink system performance is mainly related to SRS NI, SRS capability and SRS period, and the expression for $f_{DL}(NI, Capability, SrsPeriod)$ is as follows:

$$f_{DL}(NI, Capability, SrsPeriod) = \sum_{i=1}^{RRC} \partial(i) * SE_{dl}(i) * \xi_{dl}(NI(i)) * \delta_{dl}(Capability(i)) * \varphi_{dl}(SrsPeriod(i))$$

wherein:

$SE_{dl}(i)$ denotes a downlink reference spectrum efficiency of user i, which refers to the downlink spectrum efficiency of user i when the beamforming scheme is adopted, NI =-110dBm, the SRS resource is configured and the SRS period is 5ms. $SE_{dl}(i)$ may be acquired according to the downlink channel quality or statistical information of the UE.
$\partial(i)$ denotes a downlink spectrum efficiency weighting factor of user i, which may be acquired by calculating the downlink spectrum efficiency distribution and the downlink scheduling ratios of the users in the network.
$\xi_{dl}(t)$ denotes an influence factor of SRS interference on downlink performance, wherein the influence factor of interference on a downlink BF user may be acquired through simulation or test, and $\xi_{dl}(t)$ is assumed to take the following values in this embodiment:

for BF users,
$$\xi_{dl}(t) = \begin{cases} 1 & t <= -110 \\ 0.9 & -110 < t <= -100 \\ 0.8 & -100 < t <= -90 \\ 0.5 & t > -90 \end{cases} ;$$

for non-BF users, $\xi_{dl}(t) = 1$.

$\delta_{dl}(Capability(i))$ denotes an influence factor of SRS capability on downlink performance, and the SRS capability refers to the number of users that can support configuration of SRS.

For a user configuring SRS, $\delta_{dl}(Capability(i)) = 1$.
For a user without an SRS, a BF transmission scheme cannot be used to acquire a beamforming gain. $\delta_{dl}(Capability(i))$ is determined according to a performance loss of a non-BF user relative to a BF user, and may be predetermined through simulation or testing. In this embodiment, it is assumed that $\delta_{dl}(Capability(i)) = 0.8$.
$\phi_{dl}(SrsPeriod(i))$ denotes an influence factor of an SRS period on downlink performance, and may be determined through an actual test or simulation. In this embodiment, it is assumed that:

$$\varphi_{dl}(t) = \begin{cases} 1 & t <= 5ms \\ 0.9 & 5ms < t <= 40ms \\ 0.8 & t > 40ms \end{cases}$$

.

At operation 2: a candidate cell SRS time-domain resource scheme set is acquired according to the total available SRS symbols.

For the TDD uplink-downlink ratio of 2, the cell SRS time-domain resource is selected taking 5ms as a reference period, and the total available SRS symbols are respectively S1, S2, AND U1.

The current SRS time-domain resource scheme set T1 =S1 +S2.

The candidate SRS time-domain resource scheme sets T2 are:

$$T2(1)=S1+S2+U1, T2(2)=S1+U1, T2(3)=S2+U1, T2(4)=S1, T2(5)=S2, T2(6)=U1.$$

At operation 3, relevant measurement statistical information, which includes an interference situation of each symbol and basic statistical information of a network, is acquired, and information of each user is determined for each SRS time-domain resource scheme, the information including whether there is an SRS resource, a symbol where the SRS resource is located, a period, etc. The following information is mainly determined:

the number of RRC connected users in the network, assuming that there are 100 users in the network;

interference situations on each SRS symbol;

reference spectrum efficiencies $SE_{ul}(i)$ and $SE_{dl}(i)$ of each UE in the network;

a weighting factor $\beta(i)$ of each user acquired according to the distribution and scheduling ratio of the uplink SE in the network;

a weighting factor $\partial(i)$ of each user acquired according to the distribution and scheduling ratio of the downlink SE in the network;

for each time-domain resource under T1 and T2(1)-T2(6), uplink available symbols under each scheme are acquired, wherein for the uplink-downlink ratio of 2 and a special subframe ratio of 7 in the present embodiment, the number of uplink symbols $UpSymNum$ of each subframe of radio frame corresponding to T1 and T2(1)-T2(6) are respectively 28, 27, 27, 27, 28, 28 and 28; and the total number of available upstream symbols is 28.

Under the time-domain resource allocation schemes of T1, T2(1)~T2(6), an SRS resource is pre-allocated to UE, and an SRS resource allocation situation of each UE under each scheme is determined, the SRS resource allocation situation including whether the UE has an SRS, an SRS period and an NI on a symbol where the SRS is located.

At operation 4, the evaluation functions $f_{UL}(UpSymNum,NI,Capability,SrsPeriod)$, $f_{DL}(NI, Capability, SrsPeriod)$ and $G(f_{UL},f_{DL}) =a*f_{UL} +b* f_{DL}(NI, Capability, SrsPeriod)$ corresponding to T1 and T2(1)-T2(6) are respectively calculated by substituting the information acquired in operation 3 into the evaluation function determined in operation 1.

In the above formulae, a+b=1.

It is assumed that the values of the evaluation function $G(f_{UL},f_{DL})$ corresponding to T1 and T2(1)~T2(6) acquired by calculation are 260, 280, 270, 350, 240, 250 and 300 respectively.

At operation 5, assuming that the value of alfa is 1.1, the value of $G(f_{UL},f_{DL})$ corresponding to T2(3) in T2(1)-T2(6) is the largest and is equal to 350, and the value of $G(f_{UL},f_{DL})$ corresponding to T2(3) is larger than the product of alfa and $G(f_{UL},f_{DL})$ corresponding to T1, which is equal to 1.1*260, thus the SRS time-domain symbol resource scheme corresponding to T2(3) is selected.

Through the description of the foregoing embodiments, a person having ordinary skilled in the art may clearly understand that the method according to the foregoing embodiments may be implemented by software in addition to a necessary universal hardware platform, and definitely may also be implemented by hardware. However, in many cases, the former is a suggested implementation. Based on such understanding, the essence of the technical solutions of the embodiments of the present invention, or the part contributing to the related technology, may be embodied in the form of a software product. The computer software product is stored in a storage medium (such as a ROM/RAM, a magnetic disk, or an optical disk), and includes several instructions for instructing a terminal device (which may be a mobile phone, a computer, a server, or a network device) to execute the methods described in the embodiments of the present invention.

A device for dynamic selection of an SRS time-domain resource is also provided in the embodiments of the present invention. The device is used for implementing the described embodiments and exemplary implementations, and what has been described will not be elaborated. The term "module", as used hereinafter, is a combination of software and/or hardware capable of realizing a predetermined function. Although the device described in the following embodiments is preferably implemented by software, implementation of hardware or a combination of software and hardware is also possible and conceived.

Fig. 4 is a structure diagram of a device for dynamic selection of an SRS time-domain resource according to an embodiment of the present invention, and as shown in Fig. 4, the device includes:

a first acquisition unit 402, configured to acquire a current SRS time-domain resource configuration and at least one candidate SRS time-domain resource configuration, wherein the current SRS time-domain resource configuration is a time-domain symbol resource configuration being used;

a determination unit 404, configured to determine a first performance parameter of the current SRS time-domain resource configuration and a second performance parameter of each of the at least one candidate SRS time-domain resource configuration according to first measurement information, wherein the first performance parameter is used for representing system performance under the current SRS time-domain resource configuration, the second performance parameter is used for representing system performance under the candidate SRS time-domain resource configuration, and the first measurement information includes an interference influence factor on an SRS symbol; and

a replacement unit 406, configured to, in a case where at least one target SRS time-domain resource configuration exists in the at least one candidate SRS time-domain resource configuration, replace the current SRS time-domain resource configuration with one SRS time-domain resource configuration in the at least one target SRS time-domain resource configuration, wherein the second performance parameter of each of the at least one target SRS time-domain resource configuration is greater than a product of the first performance parameter and a preset ratio, and the preset ratio is greater than 1.

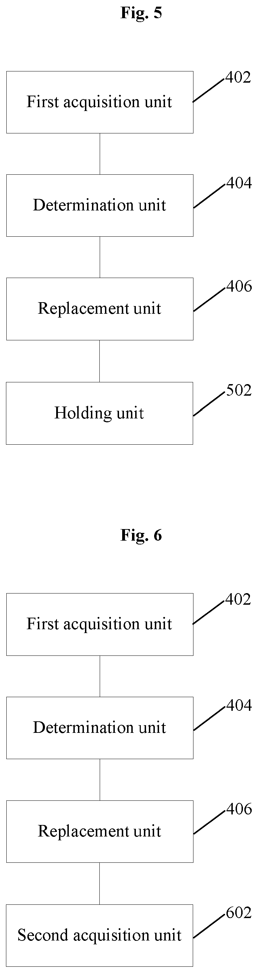

Fig. 5 is a structural block diagram of a device for dynamic selection of an SRS time-domain resource according to an embodiment of the present invention. As shown in Fig. 5, in addition to all the units shown in Fig. 4, the device may further include:

a holding unit 502, configured to, after the determination unit determines the first performance parameter of the current SRS time-domain resource configuration and the second performance parameter of each of the at least one candidate SRS time-domain resource configuration according to the first measurement information, keep the current SRS time-domain resource configuration unchanged in a case where the target SRS time-domain resource configuration does not exist in the at least one candidate SRS time-domain resource configuration.

Fig. 6 is a structural block diagram of a device for dynamic selection of an SRS time-domain resource according to an embodiment of the present invention. As shown in Fig. 6, addition to all the units shown in Fig. 4, the device may further include:

a second acquisition unit 602, configured to acquire the first measurement information before the determination unit determines the first performance parameter of the current SRS time-domain resource configuration and the second performance parameter of each of the at least one candidate SRS time-domain resource configuration according to the first measurement information.

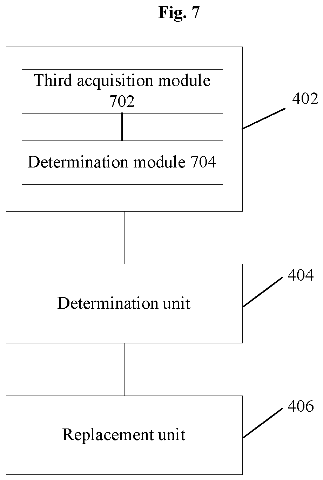

Fig. 7 is a structural block diagram of a device for dynamic selection of an SRS time-domain resource according to an embodiment of the present invention. As shown in Fig. 7, the device includes all the units shown in Fig. 4, and the first acquisition unit may further include:

a third acquisition module 702, configured to acquire all available SRS symbols;

a determination component 704, configured to determine any SRS symbol among all the available SRS symbols as a candidate SRS time-domain resource configuration; and determine any at least two SRS symbols among all the available SRS symbols as a candidate SRS time-domain resource configuration. It should be noted that each module may be implemented by software or hardware. The latter may be implemented in the following manner, but is not limited thereto. All the modules are located in a same processor; alternatively, the modules are located in different processors in an arbitrary combination.

The embodiments of the present invention also provide a computer-readable storage medium. The computer-readable storage medium stores a computer program, wherein the computer program is configured to execute the operations in any one of the method embodiments when running.

In an exemplary embodiment, the computer-readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present invention also provide an electronic device, including a memory and a processor, wherein the memory stores a computer program, and the processor is configured to run the computer program so as to execute the operations in any of the described method embodiments.

In an exemplary embodiment, the electronic device may further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

It is apparent that a person skilled in the art shall understand that all of the above-mentioned modules or operations in the present disclosure may be implemented by using a general computation apparatus, may be centralized on a single computation apparatus or may be distributed on a network composed of multiple computation apparatuses. Optionally, they may be implemented by using executable program codes of the computation apparatuses. Thus, they may be stored in a storage apparatus and executed by the computation apparatuses, the shown or described operations may be executed in a sequence different from this sequence under certain conditions, or they are manufactured into each integrated circuit module respectively, or multiple modules or operations therein are manufactured into a single integrated circuit module. Thus, the embodiments of the present disclosure are not limited to any specific hardware and software combination.

The above is only the exemplary embodiments of the present disclosure, not intended to limit the present disclosure. As will occur to those having ordinary skill in the art, the present disclosure is susceptible to various modifications and changes. The present invention is defined by the appended independent claims.

**Industrial Applicability**

In the embodiments of the present invention, in the process of selecting a time-domain resource, a first performance parameter and a second performance parameter are calculated based on an interference influence factor on an SRS symbol, so that the influence of a difference in interference levels on different SRS symbols caused by different interference situations including, for example, an atmospheric waveguide, etc. on resource selection is considered. On the basis that the difference in interference levels on different symbols is considered, the performance of SRS time-domain resource allocation is also comprehensively evaluated in combination with parameters such as available SRS symbols, an SRS capability and an SRS period. Therefore, the problem in the related art of low uplink and downlink system performance caused by unreasonable selection of a cell SRS time-domain resource can be solved, thereby achieving the effect of improving the uplink and downlink system performance.

**Claims**

1. A method for dynamic selection of a Sounding Reference Signal (SRS) time-domain resource, performed by an electronic device, comprising:

   acquiring (S202) a current SRS time-domain resource configuration and at least one candidate SRS time-domain resource configuration, wherein the current SRS time-domain resource configuration is a time-domain symbol resource configuration being used;
   determining (S204) a first performance parameter of the current SRS time-domain resource configuration and a second performance parameter of each of the at least one candidate SRS time-domain resource configuration according to first measurement information, wherein the first performance parameter is used for representing system performance under the current SRS time-domain resource configuration, the second performance parameter is used for representing system performance under the candidate SRS time-domain resource configuration, and the first measurement information comprises an interference influence factor on an SRS symbol; and
   in a case where at least one target SRS time-domain resource configuration exists in the at least one candidate SRS time-domain resource configuration, replacing (S206) the current SRS time-domain resource configuration with one SRS time-domain resource configuration in the at least one target SRS time-domain resource configuration, wherein the second performance parameter of each of the at least one target SRS time-domain resource configuration is greater than a product of the first performance parameter and a preset ratio, and the preset ratio is greater than 1.

2. The method according to claim 1, wherein after determining (S204) the first performance parameter of the current SRS time-domain resource configuration and the second performance parameter of each of the at least one candidate SRS time-domain resource configuration according to the first measurement information, the method further comprises:
   keeping the current SRS time-domain resource configuration unchanged in a case where the target SRS time-domain resource configuration does not exist in the at least one candidate SRS time-domain resource configuration.

3. The method according to claim 1, wherein before determining (S204) the first performance parameter of the current SRS time-domain resource configuration and the second performance parameter of each of the at least one candidate SRS time-domain resource configuration according to the first measurement information, the method further comprises:
acquiring the first measurement information.

4. The method according to claim 3, wherein acquiring the first measurement information comprises:
acquiring a total number of Radio Resource Control (RRC) connected users in a cell, an uplink reference spectrum efficiency of each user, a downlink reference spectrum efficiency of each user, an uplink spectrum efficiency weighting factor of each user, a downlink spectrum efficiency weighting factor of each user, an interference influence factor of SRS interference on uplink performance, and an interference influence factor of SRS interference on downlink performance.

5. The method according to claim 4, wherein after acquiring the first measurement information, the method further comprises:

calculating the first performance parameter or calculating the second performance parameter based on following formulae:

$$G(f_{UL}, f_{DL}) = a * f_{UL}(NI) + b * f_{DL}(NI) \quad (1)$$

$$f_{ul}(NI) = \sum_{i=1}^{RRC} \beta(i) * SE_{ul}(i) * \xi_{ul}(NI(i)) \quad (2)$$

$$f_{DL}(NI) = \sum_{i=1}^{RRC} \partial(i) * SE_{dl}(i) * \xi_{dl}(NI(i)) \quad (3)$$

wherein a+b=1, $G(f_{UL}, f_{DL})$ is the first performance parameter or the second performance parameter, and $_{RRC}$ denotes the total number of the RRC connected users in the cell, $SE_{ul}(i)$ denotes the uplink reference spectrum efficiency of user i, $SE_{dl}(i)$ denotes the downlink reference spectrum efficiency of user i, $\beta(i)$ denotes the uplink spectrum efficiency weighting factor of user i, $\partial(i)$ denotes the downlink spectrum efficiency weighting factor of user i, $\xi_{ul}(NI(i))$ denotes the interference influence factor of the SRS interference on the uplink performance, and $\xi_{dl}(NI(i))$ denotes the interference influence factor of the SRS interference on the downlink performance.

6. The method according to claim 3, wherein acquiring the first measurement information comprises:
acquiring a total number of RRC connected users in a cell, an influence factor of the number of uplink symbols on an uplink system, an uplink reference spectrum efficiency of each user, an uplink spectrum efficiency weighting factor of each user, an influence factor of SRS interference on uplink performance, an influence factor of SRS capability on the uplink performance, an influence factor of SRS period on the uplink performance, a downlink reference spectrum efficiency of each user, an downlink spectrum efficiency weighting factor of each user, an influence factor of the SRS interference on downlink performance, an influence factor of the SRS capability on the downlink performance, an influence factor of the SRS capability on the downlink performance, and an influence factor of the SRS period on the downlink performance, wherein the SRS capability refers to the number of users supporting configuration of SRS.

7. The method according to claim 6, wherein after acquiring the first measurement information, the method further comprises:

determining the first performance parameter or the second performance parameter based on following formulae:

$$G(f_{UL}, f_{DL}) = a * f_{UL} + b * f_{DL}(NI, Capability, SrsPeriod) \quad (4)$$

$$f_{UL}(UpSymNum, NI, Capability, SrsPeriod) =$$

$$\sum_{i=1}^{RRC} \beta(i) * SE_{ul}(i) * \theta_{ul}(UpSymNum) * \xi_{ul}(NI(i)) * \delta_{ul}(Capability(i)) * \varphi_{ul}(SrsPeriod(i))$$

(5)

$$f_{DL}(NI, Capability, SrsPeriod) = \sum_{i=1}^{RRC} \partial(i) * SE_{dl}(i)$$
$$* \xi_{dl}(NI(i)) * \delta_{dl}(Capability(i)) \quad (6)$$
$$* \phi_{dl}(SrsPeriod(i))$$

wherein a+b=1, $G(f_{UL}, f_{DL})$ is the first performance parameter or the second performance parameter, $_{RRC}$ denotes the total number of the RRC connected users in the cell, $\theta_{ul}(UpSymNum)$ denotes the influence factor of the number of uplink symbols on the uplink system, $SE_{ul}(i)$ denotes the uplink reference spectrum efficiency of user i, $\beta(i)$ denotes the uplink spectrum efficiency weighting factor of user i, $\xi_{ul}(NI(i))$ denotes the interference influence factor of the SRS interference on the uplink performance, $\delta_{ul}(Capability(i))$ denotes the influence factor of the SRS capability on the uplink performance, $\phi ul(SrsPeriod(i))$ denotes the influence factor of the SRS period on the uplink performance, $SE_{dl}(i)$ denotes the downlink reference spectrum efficiency of user i, $\partial(i)$ denotes the downlink spectrum efficiency weighting factor of user i, $\xi_{dl}(NI(i))$ denotes the interference influence factor of the SRS interference on the downlink performance, $\delta_{dl}(Capability(i))$ denotes the influence factor of the SRS capability on the downlink performance, and $\phi_{dl}(SrsPeriod(i))$ denotes the influence factor of the SRS period on the downlink performance, wherein the SRS capability refers to the number of users supporting configuration of SRS.

8. The method according to any one of claims 1 to 7, wherein acquiring (S202) the at least one candidate SRS time-domain resource configuration comprises:

   acquiring all available SRS symbols;
   determining any SRS symbol among all the available SRS symbols as a candidate SRS time-domain resource configuration; and
   determining any at least two SRS symbols among all the available SRS symbols as a candidate SRS time-domain resource configuration.

9. A device for dynamic selection of a Sounding Reference Signal (SRS) time-domain resource, comprising:

   a first acquisition unit (402), configured to acquire a current SRS time-domain resource configuration and at least one candidate SRS time-domain resource configuration, wherein the current SRS time-domain resource configuration is a time-domain symbol resource configuration being used;
   a determination unit (404), configured to determine a first performance parameter of the current SRS time-domain resource configuration and a second performance parameter of each of the at least one candidate SRS time-domain resource configuration according to first measurement information, wherein the first performance parameter is used for representing system performance under the current SRS time-domain resource configuration, the second performance parameter is used for representing system performance under the candidate SRS time-domain resource configuration, and the first measurement information comprises an interference influence factor on an SRS symbol; and
   a replacement unit (406), configured to, in a case where at least one target SRS time-domain resource configuration exists in the at least one candidate SRS time-domain resource configuration, replace the current SRS time-domain resource configuration with one SRS time-domain resource configuration in the at least one target SRS time-domain resource configuration, wherein the second performance parameter of each of the at least one target SRS time-domain resource configuration is greater than a product of the first performance parameter and a preset ratio, and the preset ratio is greater than 1.

10. The device according to claim 9, wherein the device further comprises:
    a holding unit (502), configured to, after the determination unit (404) determines the first performance parameter of the current SRS time-domain resource configuration and the second performance parameter of each of the at least one candidate SRS time-domain resource configuration according to the first measurement information, keep the current SRS time-domain resource configuration unchanged in a case where the target SRS time-domain resource configuration does not exist in the at least one candidate SRS time-domain resource configuration.

11. The device according to claim 9, wherein the device further comprises:
a second acquisition unit (602), configured to acquire the first measurement information before the determination unit (404) determines the first performance parameter of the current SRS time-domain resource configuration and the second performance parameter of each of the at least one candidate SRS time-domain resource configuration according to the first measurement information.

12. The device according to claim 11, wherein the second acquisition unit (602) comprises:
a first acquisition module, configured to acquire a total number of Radio Resource Control (RRC) connected users in a cell, an uplink reference spectrum efficiency of each user, a downlink reference spectrum efficiency of each user, an uplink spectrum efficiency weighting factor of each user, a downlink spectrum efficiency weighting factor of each user, an interference influence factor of SRS interference on uplink performance, and an interference influence factor of SRS interference on downlink performance.

13. The device according to claim 11, wherein the second acquisition unit (602) comprises:
a second acquisition module, configured to acquire a total number of RRC connected users in a cell, an influence factor of the number of uplink symbols on an uplink system, an uplink reference spectrum efficiency of each user, an uplink spectrum efficiency weighting factor of each user, an influence factor of SRS interference on uplink performance, an influence factor of SRS capability on the uplink performance, an influence factor of SRS period on the uplink performance, a downlink reference spectrum efficiency of each user, an downlink spectrum efficiency weighting factor of each user, an influence factor of the SRS interference on downlink performance, an influence factor of the SRS capability on the downlink performance, an influence factor of the SRS capability on the downlink performance, and an influence factor of the SRS period on the downlink performance, wherein the SRS capability refers to the number of users supporting configuration of SRS.

14. The device according to any one of claims 9 to 13, wherein the first acquisition unit (402) comprises:

a third acquisition module (702), configured to acquire all available SRS symbols; and
a determination module (704), configured to determine any SRS symbol among all the available SRS symbols as a candidate SRS time-domain resource configuration; and determine any at least two SRS symbols among all the available SRS symbols as a candidate SRS time-domain resource configuration.

15. A computer-readable storage medium, the computer-readable storage medium storing a computer program, wherein the computer program is configured to execute the method of any one of claims 1 to 8 when running.

**Patentansprüche**

1. Verfahren für eine dynamische Auswahl einer Zeitbereichsressource eines Sounding-Reference-Signals (SRS), das durch eine elektronische Vorrichtung durchgeführt wird, umfassend:

Erfassen (S202) einer aktuellen SRS-Zeitbereichsressourcenkonfiguration und mindestens einer Kandidaten-SRS-Zeitbereichsressourcenkonfiguration, wobei die aktuelle SRS-Zeitbereichsressourcenkonfiguration eine Zeitbereichssymbolressourcenkonfiguration ist, die verwendet wird;
Bestimmen (S204) eines ersten Leistungsparameters der aktuellen SRS-Zeitbereichsressourcenkonfiguration und eines zweiten Leistungsparameters jeder der mindestens einen Kandidaten-SRS-Zeitbereichsressourcenkonfiguration gemäß ersten Messinformationen, wobei der erste Leistungsparameter zum Darstellen der Systemleistung unter der aktuellen SRS-Zeitbereichsressourcenkonfiguration verwendet wird, der zweite Leistungsparameter zum Darstellen der Systemleistung unter der Kandidaten-SRS-Zeitbereichsressourcenkonfiguration verwendet wird, und die ersten Messinformationen einen Interferenzeinflussfaktor auf ein SRS-Symbol umfassen; und
in einem Fall, in dem mindestens eine Ziel-SRS-Zeitbereichsressourcenkonfiguration in der mindestens einen Kandidaten-SRS-Zeitbereichsressourcenkonfiguration vorhanden ist, Ersetzen (S206) der aktuellen SRS-Zeitbereichsressourcenkonfiguration durch eine SRS-Zeitbereichsressourcenkonfiguration in der mindestens einen Ziel-SRS-Zeitbereichsressourcenkonfiguration, wobei der zweite Leistungsparameter von jeder der mindestens einen Ziel-SRS-Zeitbereichsressourcenkonfiguration größer als ein Produkt des ersten Leistungsparameters und eines voreingestellten Verhältnisses ist, und das voreingestellte Verhältnis größer als 1 ist.

2. Verfahren nach Anspruch 1, wobei nach dem Bestimmen (S204) des ersten Leistungsparameters der aktuellen SRS-Zeitbereichsressourcenkonfiguration und des zweiten Leistungsparameters jeder der mindestens einen Kandidaten-SRS-Zeitbereichsressourcenkonfiguration gemäß den ersten Messinformationen das Verfahren ferner umfasst: unverändertes Beibehalten der aktuellen SRS-Zeitbereichsressourcenkonfiguration in einem Fall, in dem die Ziel-SRS-Zeitbereichsressourcenkonfiguration nicht in der mindestens einen Kandidaten-SRS-Zeitbereichsressourcenkonfiguration vorhanden ist.

3. Verfahren nach Anspruch 1, wobei vor dem Bestimmen (S204) des ersten Leistungsparameters der aktuellen SRS-Zeitbereichsressourcenkonfiguration und des zweiten Leistungsparameters jeder der mindestens einen Kandidaten-SRS-Zeitbereichsressourcenkonfiguration gemäß den ersten Messinformationen das Verfahren ferner umfasst: Erfassen der ersten Messinformationen.

4. Verfahren nach Anspruch 3, wobei das Erfassen der ersten Messinformationen umfasst: Erfassen einer Gesamtanzahl von mit Funkressourcensteuerung (RRC) verbundenen Benutzern in einer Zelle, einer Uplink-Referenzspektrumeffizienz jedes Benutzers, einer Downlink-Referenzspektrumeffizienz jedes Benutzers, eines Uplink-Spektrumeffizienzgewichtungsfaktors jedes Benutzers, eines Downlink-Spektrumeffizienzgewichtungsfaktors jedes Benutzers, eines Interferenzeinflussfaktors von SRS-Interferenz auf eine Uplink-Leistung und eines Interferenzeinflussfaktors von SRS-Interferenz auf eine Downlink-Leistung.

5. Verfahren nach Anspruch 4, wobei nach dem Erfassen der ersten Messinformationen das Verfahren ferner umfasst:

Berechnen des ersten Leistungsparameters oder Berechnen des zweiten Leistungsparameters basierend auf folgenden Formeln:

$$G(f_{UL}, f_{DL}) = \alpha^* f_{UL}(NI) + b^* f_{DL}(NI) \quad (1)$$

$$f_{ul}(NI) = \sum_{i=1}^{RRC} \beta(i)^* SE_{ul}(i)^* \xi_{ul}(NI(i)) \quad (2)$$

$$f_{DL}(NI) = \sum_{i=1}^{RRC} \partial(i)^* SE_{dl}(i)^* \xi_{dl}(NI(i)) \quad (3)$$

wobei a+b=1, $G(f_{UL}, f_{DL})$ der erste Leistungsparameter oder der zweite Leistungsparameter ist, und $RRC$ die Gesamtanzahl der RRC-verbundenen Benutzer in der Zelle bezeichnet, $SE_{ul}(i)$ die Uplink-Referenzspektru-meffizienz des Benutzers i bezeichnet, $SE_{dl}(i)$ die Downlink-Referenzspektrumeffizienz des Benutzers i be-zeichnet, $\beta(i)$ den Uplink-Spektrumeffizienzgewichtungsfaktor des Benutzers i bezeichnet, $\partial(i)$ den Downlink-Spektrumeffizienzgewichtungsfaktor des Benutzers i bezeichnet, $\xi_{ul}(NI(i))$ den Interferenzeinflussfaktor der SRS-Interferenz auf die Uplink-Leistung bezeichnet, und $\xi_{dl}(NI(i))$ den Interferenzeinflussfaktor der SRS-Interferenz auf die Downlink-Leistung bezeichnet.

6. Verfahren nach Anspruch 3, wobei das Erfassen der ersten Messinformationen umfasst: Erfassen einer Gesamtanzahl von RRC-verbundenen Benutzern in einer Zelle, eines Einflussfaktors der Anzahl von Uplink-Symbolen auf ein Uplink-System, einer Uplink-Referenzspektrumeffizienz jedes Benutzers, eines Uplink-Spektrumeffizienzgewichtungsfaktors jedes Benutzers, eines Einflussfaktors von SRS-Interferenz auf die Uplink-Leistung, eines Einflussfaktors von SRS-Fähigkeit auf die Uplink-Leistung, eines Einflussfaktors einer SRS-Periode auf die Uplink-Leistung, einer Downlink-Referenzspektrumeffizienz jedes Benutzers, eines Downlink-Spektrumeffizienzgewichtungsfaktors jedes Benutzers, eines Einflussfaktors der SRS-Interferenz auf die Downlink-Leistung, eines Einflussfaktors der SRS-Fähigkeit auf die Downlink-Leistung, eines Einflussfaktors der SRS-Fähigkeit auf die Downlink-Leistung und eines Einflussfaktors der SRS-Periode auf die Downlink-Leistung, wobei sich die SRS-Fähigkeit auf die Anzahl von Benutzern bezieht, die eine Konfiguration von SRS unterstützen.

7. Verfahren nach Anspruch 6, wobei nach dem Erfassen der ersten Messinformationen das Verfahren ferner umfasst:

   Bestimmen des ersten Leistungsparameters oder des zweiten Leistungsparameters basierend auf folgenden Formeln:

$$G(f_{UL}, f_{DL}) = \alpha * f_{UL} + b * f_{DL}(NI, \text{Fähigkeit}, \text{SrsPeriode}) \quad (4)$$

$$f_{UL}(UpSymNum, NI, \text{Fähigkeit}, \text{SrsPeriode}) =$$

$$\sum_{i=1}^{RRC'} \beta(i) * SE_{ul}(i) * \theta_{ul}(UpSymNum) * \xi_{ul}(NI(i)) * \delta_{ul}(\text{Fähigkeit}(i)) * \varphi_{ul}(\text{SrsPeriode}(i))$$

$$(5)$$

$$f_{DL}(NI, \text{Fähigkeit}, \text{SrsPeriode}) = \sum_{i=1}^{RRC'} \partial(i) * SE_{dl}(i)$$

$$* \xi_{dl}(NI(i)) * \delta_{dl}(\text{Fähigkeit}(i)) \quad (6)$$

$$* \phi_{dl}(\text{SrsPeriode}(i))$$

   wobei a+b=1, $G(f_{UL}, f_{DL})$ der erste Leistungsparameter oder der zweite Leistungsparameter ist, $RRC$ die Gesamtanzahl der RRC-verbundenen Benutzer in der Zelle bezeichnet, $\theta_{ul}(UpSymNum)$ den Einflussfaktor der Anzahl von Uplink-Symbolen auf das Uplink-System bezeichnet, $SE_{ul}(i)$ die Uplink-Referenzspektrumeffizienz von Benutzer i bezeichnet, $\beta(i)$ den Uplink-Spektrumeffizienzgewichtungsfaktor von Benutzer i bezeichnet, $\xi_{ul}(NI(i))$ den Interferenzeinflussfaktor der SRS-Interferenz auf die Uplink-Leistung bezeichnet, $\delta_{ul}(\text{Fähigkeit}(i))$ den Einflussfaktor der SRS-Fähigkeit auf die Uplink-Leistung bezeichnet, $\phi_{ul}(\text{SrsPeriode}(i))$ den Einflussfaktor der SRS-Periode auf die Uplink-Leistung bezeichnet, $SE_{dl}(i)$ die Downlink-Referenzspektrumeffizienz von Benutzer i bezeichnet, $\partial(i)$ den Downlink-Spektrumeffizienzgewichtungsfaktor von Benutzer i bezeichnet, $\xi_{dl}(NI(i))$ den Interferenzeinflussfaktor der SRS-Interferenz auf die Downlink-Leistung bezeichnet, $\delta_{dl}(\text{Fähigkeit}(i))$ den Einflussfaktor der SRS-Fähigkeit auf die Downlink-Leistung bezeichnet, und $\phi_{dl}(\text{SrsPeriode}(i))$ den Einflussfaktor der SRS-Periode auf die Downlink-Leistung bezeichnet, wobei sich die SRS-Fähigkeit auf die Anzahl von Benutzern bezieht, die eine Konfiguration von SRS unterstützen.

8. Verfahren nach einem der Ansprüche 1 bis 7, wobei das Erfassen (S202) der mindestens einen Kandidaten-SRS-Zeitbereichsressourcenkonfiguration umfasst:

   Erfassen aller verfügbaren SRS-Symbole;
   Bestimmen eines beliebigen SRS-Symbols unter allen verfügbaren SRS-Symbolen als Kandidaten-SRS-Zeitbereichsressourcenkonfiguration; und
   Bestimmen von mindestens zwei SRS-Symbolen unter allen verfügbaren SRS-Symbolen als eine Kandidaten-SRS-Zeitbereichsressourcenkonfiguration.

9. Vorrichtung für die dynamische Auswahl einer Zeitbereichsressource eines Sounding-Reference-Signals (SRS), umfassend:

   eine erste Erfassungseinheit (402), die konfiguriert ist, um eine aktuelle SRS-Zeitbereichsressourcenkonfiguration und mindestens eine Kandidaten-SRS-Zeitbereichsressourcenkonfiguration zu erfassen, wobei die aktuelle SRS-Zeitbereichsressourcenkonfiguration eine Zeitbereichssymbolressourcenkonfiguration ist, die verwendet wird;
   eine Bestimmungseinheit (404), die konfiguriert ist, um einen ersten Leistungsparameter der aktuellen SRS-Zeitbereichsressourcenkonfiguration und einen zweiten Leistungsparameter jeder der mindestens einen Kandidaten-SRS-Zeitbereichsressourcenkonfiguration gemäß ersten Messinformationen zu bestimmen, wobei der erste Leistungsparameter zum Darstellen der Systemleistung unter der aktuellen SRS-Zeitbereichsressourcenkonfiguration verwendet wird, der zweite Leistungsparameter zum Darstellen der Systemleistung unter der Kandidaten-SRS-Zeitbereichsressourcenkonfiguration verwendet wird, und die ersten Messinformationen einen Interferenzeinflussfaktor auf ein SRS-Symbol umfassen; und
eine Ersetzungseinheit (406), die konfiguriert ist, um in einem Fall, in dem mindestens eine Ziel-SRS-Zeitbereichsressourcenkonfiguration in der mindestens einen Kandidaten-SRS-Zeitbereichsressourcenkonfiguration vorhanden ist, die aktuelle SRS-Zeitbereichsressourcenkonfiguration durch eine SRS-Zeitbereichsressourcenkonfiguration in der mindestens einen Ziel-SRS-Zeitbereichsressourcenkonfiguration zu ersetzen, wobei der zweite Leistungsparameter von jeder der mindestens einen Ziel-SRS-Zeitbereichsressourcenkonfiguration größer als ein Produkt des ersten Leistungsparameters und eines voreingestellten Verhältnisses ist, und das voreingestellte Verhältnis größer als 1 ist.

10. Vorrichtung nach Anspruch 9, wobei die Vorrichtung ferner umfasst:
eine Halteeinheit (502), die konfiguriert ist, um, nachdem die Bestimmungseinheit (404) den ersten Leistungsparameter der aktuellen SRS-Zeitbereichsressourcenkonfiguration und den zweiten Leistungsparameter jeder der mindestens einen Kandidaten-SRS-Zeitbereichsressourcenkonfiguration gemäß den ersten Messinformationen bestimmt hat, die aktuelle SRS-Zeitbereichsressourcenkonfiguration unverändert beizubehalten, in einem Fall, in dem die Ziel-SRS-Zeitbereichsressourcenkonfiguration nicht in der mindestens einen Kandidaten-SRS-Zeitbereichsressourcenkonfiguration vorhanden ist.

11. Vorrichtung nach Anspruch 9, wobei die Vorrichtung ferner umfasst:
eine zweite Erfassungseinheit (602), die konfiguriert ist, um die ersten Messinformationen zu erfassen, bevor die Bestimmungseinheit (404) den ersten Leistungsparameter der aktuellen SRS-Zeitbereichsressourcenkonfiguration und den zweiten Leistungsparameter jeder der mindestens einen Kandidaten-SRS-Zeitbereichsressourcenkonfiguration gemäß den ersten Messinformationen bestimmt.

12. Vorrichtung nach Anspruch 11, wobei die zweite Erfassungseinheit (602) umfasst:
ein erstes Erfassungsmodul, das konfiguriert ist, um eine Gesamtanzahl von mit Funkressourcensteuerung (RRC) verbundenen Benutzern in einer Zelle, eine Uplink-Referenzspektrumeffizienz jedes Benutzers, eine Downlink-Referenzspektrumeffizienz jedes Benutzers, einen Uplink-Spektrumeffizienzgewichtungsfaktor jedes Benutzers, einen Downlink-Spektrumeffizienzgewichtungsfaktor jedes Benutzers, einen Interferenzeinflussfaktor von SRS-Interferenz auf die Uplink-Leistung und einen Interferenzeinflussfaktor von SRS-Interferenz auf die Downlink-Leistung zu erfassen.

13. Vorrichtung nach Anspruch 11, wobei die zweite Erfassungseinheit (602) umfasst:
ein zweites Erfassungsmodul, das konfiguriert ist, um eine Gesamtanzahl von RRC-verbundenen Benutzern in einer Zelle, einen Einflussfaktor der Anzahl von Uplink-Symbolen auf ein Uplink-System, eine Uplink-Referenzspektrumeffizienz jedes Benutzers, einen Uplink-Spektrumeffizienzgewichtungsfaktor jedes Benutzers, einen Einflussfaktor von SRS-Interferenz auf die Uplink-Leistung, einen Einflussfaktor von SRS-Fähigkeit auf die Uplink-Leistung, einen Einflussfaktor der SRS-Periode auf die Uplink-Leistung, eine Downlink-Referenzspektrumeffizienz jedes Benutzers, einen Downlink-Spektrumeffizienzgewichtungsfaktors jedes Benutzers, einen Einflussfaktor der SRS-Interferenz auf die Downlink-Leistung, einen Einflussfaktor der SRS-Fähigkeit auf die Downlink-Leistung, einen Einflussfaktor der SRS-Fähigkeit auf die Downlink-Leistung und einen Einflussfaktor der SRS-Periode auf die Downlink-Leistung zu erfassen, wobei sich die SRS-Fähigkeit auf die Anzahl von Benutzern bezieht, die eine Konfiguration von SRS unterstützen.

14. Vorrichtung nach einem der Ansprüche 9 bis 13, wobei die erste Erfassungseinheit (402) umfasst:

ein drittes Erfassungsmodul (702), das konfiguriert ist, um alle verfügbaren SRS-Symbole zu erfassen; und
ein Bestimmungsmodul (704), das konfiguriert ist, um ein beliebiges SRS-Symbol unter allen verfügbaren SRS-Symbolen als eine Kandidaten-SRS-Zeitbereichsressourcenkonfiguration zu bestimmen; und mindestens zwei SRS-Symbole unter allen verfügbaren SRS-Symbolen als eine Kandidaten-SRS-Zeitbereichsressourcenkonfiguration zu bestimmen.

15. Computerlesbares Speicherungsmedium, wobei das computerlesbare Speicherungsmedium ein Computerprogramm speichert, wobei das Computerprogramm konfiguriert ist, um das Verfahren nach einem der Ansprüche 1 bis 8 auszuführen, wenn es abläuft.

**Revendications**

1. Procédé destiné à la sélection dynamique d'une ressource de domaine temporel de signal de référence de sondage (SRS), mis en œuvre par un dispositif électronique, comprenant :

   l'acquisition (S202) d'une configuration actuelle de ressource de domaine temporel SRS et d'au moins une configuration candidate de ressource de domaine temporel SRS, dans lequel la configuration actuelle de ressource de domaine temporel SRS est une configuration de ressource de symbole de domaine temporel étant utilisée ;

   la détermination (S204) d'un premier paramètre de performance de la configuration actuelle de ressource de domaine temporel SRS et d'un second paramètre de performance de chacune parmi l'au moins une configuration candidate de ressource de domaine temporel SRS selon des premières informations de mesure, dans lequel le premier paramètre de performance est utilisé pour représenter une performance système sous la configuration actuelle de ressource de domaine temporel SRS, le second paramètre de performance est utilisé pour représenter une performance système sous la configuration candidate de ressource de domaine temporel SRS, et les premières informations de mesure comprennent un facteur d'influence d'interférence sur un symbole SRS ; et

   dans un cas où au moins une configuration cible de ressource de domaine temporel SRS existe dans l'au moins une configuration candidate de ressource de domaine temporel SRS, le remplacement (S206) de la configuration actuelle de ressource de domaine temporel SRS par une configuration de ressource de domaine temporel SRS dans l'au moins une configuration cible de ressource de domaine temporel SRS, dans lequel le second paramètre de performance de chacune parmi l'au moins une configuration cible de ressource de domaine temporel SRS est supérieur à un produit du premier paramètre de performance et d'un rapport prédéfini, et le rapport prédéfini est supérieur à 1.

2. Procédé selon la revendication 1, dans lequel après détermination (S204) du premier paramètre de performance de la configuration actuelle de ressource de domaine temporel SRS et du second paramètre de performance de chacune parmi l'au moins une configuration candidate de ressource de domaine temporel SRS selon les premières informations de mesure, le procédé comprend en outre :

   le maintien de la configuration actuelle de ressource de domaine temporel SRS inchangée dans un cas où la configuration cible de ressource de domaine temporel SRS n'existe pas dans l'au moins une configuration candidate de ressource de domaine temporel SRS.

3. Procédé selon la revendication 1, dans lequel avant détermination (S204) du premier paramètre de performance de la configuration actuelle de ressource de domaine temporel SRS et du second paramètre de performance de chacune parmi l'au moins une configuration candidate de ressource de domaine temporel SRS selon les premières informations de mesure, le procédé comprend en outre :
   l'acquisition des premières informations de mesure.

4. Procédé selon la revendication 3, dans lequel l'acquisition des premières informations de mesure comprend :
   l'acquisition d'un nombre total d'utilisateurs connectés à une commande de ressource radio (RRC) dans une cellule, d'une efficacité spectrale de référence de liaison montante de chaque utilisateur, d'une efficacité spectrale de référence de liaison descendante de chaque utilisateur, d'un facteur de pondération d'efficacité spectrale de liaison montante de chaque utilisateur, d'un facteur de pondération d'efficacité spectrale de liaison descendante de chaque utilisateur, d'un facteur d'influence d'interférence d'une interférence SRS sur une performance de liaison montante, et d'un facteur d'influence d'interférence d'une interférence SRS sur une performance de liaison descendante.

5. Procédé selon la revendication 4, dans lequel après acquisition des premières informations de mesure, le procédé comprend en outre :

   le calcul du premier paramètre de performance ou le calcul du second paramètre de performance en fonction des formules suivantes :

$$G(f_{UL}, f_{DL}) = a * f_{UL}(NI) + b * f_{DL}(NI) \ (1)$$

$$f_{ul}(NI) = \sum_{i=1}^{RRC} \beta(i) * SE_{ul}(i) * \xi_{ul}(NI(i)) \ (2)$$

$$f_{DL}(NI) = \sum_{i=1}^{RRC} \partial(i) \, {}^*SE_{dl}(i) {}^*\xi_{dl}(NI(i)) \ (3)$$

dans lequel a+b=1, $G(f_{UL}, f_{DL})$ est le premier paramètre de performance ou le second paramètre de performance, et $_{RRC}$ désigne le nombre total des utilisateurs connectés à RRC dans la cellule, $SE_{ul}(i)$ désigne l'efficacité spectrale de référence de liaison montante d'un utilisateur i, $SE_{dl}(i)$ désigne l'efficacité spectrale de référence de liaison descendante d'un utilisateur i, $\beta(i)$ désigne le facteur de pondération d'efficacité spectrale de liaison montante d'un utilisateur i, $\partial(i)$ désigne le facteur de pondération d'efficacité spectrale de liaison descendante d'un utilisateur i, $\xi_{ul}(NI(i))$ désigne le facteur d'influence d'interférence de l'interférence SRS sur la performance de liaison montante, et $\xi_{dl}(NI(i))$ désigne le facteur d'influence d'interférence de l'interférence SRS sur la performance de liaison descendante.

6. Procédé selon la revendication 3, dans lequel l'acquisition des premières informations de mesure comprend : l'acquisition d'un nombre total d'utilisateurs connectés à RRC dans une cellule, d'un facteur d'influence du nombre de symboles de liaison montante sur un système de liaison montante, d'une efficacité spectrale de référence de liaison montante de chaque utilisateur, d'un facteur de pondération d'efficacité spectrale de liaison montante de chaque utilisateur, d'un facteur d'influence d'une interférence SRS sur une performance de liaison montante, d'un facteur d'influence d'une capacité SRS sur la performance de liaison montante, d'un facteur d'influence d'une période SRS sur la performance de liaison montante, d'une efficacité spectrale de référence de liaison descendante de chaque utilisateur, d'un facteur de pondération d'efficacité spectrale de liaison descendante de chaque utilisateur, d'un facteur d'influence de l'interférence SRS sur une performance de liaison descendante, d'un facteur d'influence de la capacité SRS sur la performance de liaison descendante, d'un facteur d'influence de la capacité SRS sur la performance de liaison descendante, et d'un facteur d'influence de la période SRS sur la performance de liaison descendante, dans lequel la capacité SRS fait référence au nombre d'utilisateurs prenant en charge une configuration de SRS.

7. Procédé selon la revendication 6, dans lequel après acquisition des premières informations de mesure, le procédé comprend en outre :

la détermination du premier paramètre de performance ou du second paramètre de performance en fonction des formules suivantes :

$$G(f_{UL}, f_{DL}) = a {}^*f_{UL} + b {}^*f_{DL}(NI, Capability, SrsPeriod) \ (4)$$

$$f_{uL}(UpSymNum, NI, Capability, SrsPeriod) =$$

$$\sum_{i=1}^{RRC} \beta(i) \, {}^*SE_{ul}(i) {}^*\theta_{ul}(UpSymNum) {}^*\xi_{ul}(NI(i)) {}^*\delta_{ul}(Capability(i)) {}^*\varphi_{ul}(SrsPeriod(i))$$

$$(5)$$

$$f_{DL}(NI, Capability, SrsPeriod) = \sum_{i=1}^{RRC} \partial(i) \, {}^*SE_{dl}(i)$$

$$^*\xi_{dl}(NI(i)) {}^*\delta_{dl}(Capability(i)) \ (6)$$

$$^*\phi_{dl}(SrsPeriod(i))$$

dans lequel a+b=1, $G(f_{UL}, f_{DL})$ est le premier paramètre de performance ou le second paramètre de performance, $_{RRC}$ désigne le nombre total des utilisateurs connectés à RRC dans la cellule, $\theta_{ul}(UpSymNum)$ désigne le facteur d'influence du nombre de symboles de liaison montante sur le système de liaison montante, $SE_{ul}(i)$ désigne l'efficacité spectrale de référence de liaison montante d'un utilisateur i, $\beta(i)$ désigne le facteur de pondération d'efficacité spectrale de liaison montante d'un utilisateur i, $\xi_{ul}(NI(i))$ désigne le facteur d'influence d'interférence de l'interférence SRS sur la performance de liaison montante, $\delta_{ul}(Capability(i))$ désigne le facteur d'influence de la capacité SRS sur la performance de liaison montante, $\phi_{ul}(SrsPeriod(i))$ désigne le facteur d'influence de la période SRS sur la performance de liaison montante, $SE_{dl}(i)$ désigne l'efficacité spectrale de référence de liaison descendante d'un utilisateur i, $\partial(i)$ désigne le facteur de pondération d'efficacité spectrale de liaison descendante d'un utilisateur i, $\xi_{dl}(NI(i))$ désigne le facteur d'influence d'interférence de l'interférence SRS sur la performance de liaison descendante, $\delta_{dl}(Capability(i))$ désigne le facteur d'influence de la capacité SRS sur la performance de liaison descendante, et $\phi_{dl}(SrsPeriod(i))$ désigne le facteur d'influence de la période SRS sur la performance de liaison descendante, dans lequel la capacité SRS fait référence au nombre d'utilisateurs prenant en charge une configuration de SRS.

8. Procédé selon l'une quelconque des revendications 1 à 7, dans lequel l'acquisition (S202) de l'au moins une configuration candidate de ressource de domaine temporel SRS comprend :

l'acquisition de tous les symboles SRS disponibles ;
la détermination d'un quelconque symbole SRS parmi tous les symboles SRS disponibles en tant que configuration candidate de ressource de domaine temporel SRS ; et
la détermination d'au moins deux symboles SRS quelconques parmi tous les symboles SRS disponibles en tant que configuration candidate de ressource de domaine temporel SRS.

9. Dispositif destiné à une sélection dynamique d'une ressource de domaine temporel de signal de référence de sondage (SRS), comprenant :

une première unité d'acquisition (402), configurée pour acquérir une configuration actuelle de ressource de domaine temporel SRS et au moins une configuration candidate de ressource de domaine temporel SRS, dans lequel la configuration actuelle de ressource de domaine temporel SRS est une configuration de ressource de symbole de domaine temporel utilisée ;
une unité de détermination (404), configurée pour déterminer un premier paramètre de performance de la configuration actuelle de ressource de domaine temporel SRS et un second paramètre de performance de chacune parmi l'au moins une configuration candidate de ressource de domaine temporel SRS selon des premières informations de mesure, dans lequel le premier paramètre de performance est utilisé pour représenter une performance système sous la configuration actuelle de ressource de domaine temporel SRS, le second paramètre de performance est utilisé pour représenter une performance système sous la configuration candidate de ressource de domaine temporel SRS, et les premières informations de mesure comprennent un facteur d'influence d'interférence sur un symbole SRS ; et
une unité de remplacement (406), configurée, dans un cas où au moins une configuration cible de ressource de domaine temporel SRS existe dans l'au moins une configuration candidate de ressource de domaine temporel SRS, pour remplacer la configuration actuelle de ressource de domaine temporel SRS par une configuration de ressource de domaine temporel SRS dans l'au moins une configuration cible de ressource de domaine temporel SRS, dans lequel le second paramètre de performance de chacune parmi l'au moins une configuration cible de ressource de domaine temporel SRS est supérieur à un produit du premier paramètre de performance et d'un rapport prédéfini, et le rapport prédéfini est supérieur à 1.

10. Dispositif selon la revendication 9, dans lequel le dispositif comprend en outre :
une unité de maintien (502), configurée, après que l'unité de détermination (404) a déterminé le premier paramètre de performance de la configuration actuelle de ressource de domaine temporel SRS et le second paramètre de performance de chacune parmi l'au moins une configuration candidate de ressource de domaine temporel SRS selon les premières informations de mesure, pour maintenir la configuration actuelle de ressource de domaine temporel SRS inchangée dans un cas où la configuration cible de ressource de domaine temporel SRS n'existe pas dans l'au moins une configuration candidate de ressource de domaine temporel SRS.

11. Dispositif selon la revendication 9, dans lequel le dispositif comprend en outre :
une seconde unité d'acquisition (602), configurée pour acquérir les premières informations de mesure avant que l'unité de détermination (404) ne détermine le premier paramètre de performance de la configuration actuelle de ressource de domaine temporel SRS et le second paramètre de performance de chacune parmi l'au moins une configuration candidate de ressource de domaine temporel SRS selon les premières informations de mesure.

12. Dispositif selon la revendication 11, dans lequel la seconde unité d'acquisition (602) comprend :
un premier module d'acquisition, configuré pour acquérir un nombre total d'utilisateurs connectés à une commande de ressource radio (RRC) dans une cellule, une efficacité spectrale de référence de liaison montante de chaque utilisateur, une efficacité spectrale de référence de liaison descendante de chaque utilisateur, un facteur de pondération d'efficacité spectrale de liaison montante de chaque utilisateur, un facteur de pondération d'efficacité spectrale de liaison descendante de chaque utilisateur, un facteur d'influence d'interférence d'une interférence SRS sur une performance de liaison montante, et un facteur d'influence d'interférence d'une interférence SRS sur une performance de liaison descendante.

**13.** Dispositif selon la revendication 11, dans lequel la seconde unité d'acquisition (602) comprend :
un deuxième module d'acquisition, configuré pour acquérir un nombre total d'utilisateurs connectés à RRC dans une cellule, un facteur d'influence du nombre de symboles de liaison montante sur un système de liaison montante, une efficacité spectrale de référence de liaison montante de chaque utilisateur, un facteur de pondération d'efficacité spectrale de liaison montante de chaque utilisateur, un facteur d'influence d'une interférence SRS sur une performance de liaison montante, un facteur d'influence d'une capacité SRS sur la performance de liaison montante, un facteur d'influence d'une période SRS sur la performance de liaison montante, une efficacité spectrale de référence de liaison descendante de chaque utilisateur, un facteur de pondération d'efficacité spectrale de liaison descendante de chaque utilisateur, un facteur d'influence de l'interférence SRS sur une performance de liaison descendante, un facteur d'influence de la capacité SRS sur la performance de liaison descendante, un facteur d'influence de la capacité SRS sur la performance de liaison descendante, et un facteur d'influence de la période SRS sur la performance de liaison descendante, dans lequel la capacité SRS fait référence au nombre d'utilisateurs prenant en charge une configuration de SRS.

**14.** Dispositif selon l'une quelconque des revendications 9 à 13, dans lequel la première unité d'acquisition (402) comprend :

un troisième module d'acquisition (702), configuré pour acquérir tous les symboles SRS disponibles ; et
un module de détermination (704), configuré pour déterminer l'un quelconque symbole SRS parmi tous les symboles SRS disponibles en tant que configuration candidate de ressource de domaine temporel SRS ; et déterminer au moins deux symboles SRS quelconques parmi tous les symboles SRS disponibles en tant que configuration candidate de ressource de domaine temporel SRS.

**15.** Support de stockage lisible par ordinateur, le support de stockage lisible par ordinateur stockant un programme d'ordinateur, dans lequel le programme d'ordinateur est configuré pour exécuter le procédé selon l'une quelconque des revendications 1 à 8 lorsqu'il fonctionne.

**Fig. 1**

**Fig. 2**

Acquire a current SRS time-domain resource configuration and at least one candidate SRS time-domain resource configuration, wherein the current SRS time-domain resource configuration is a time-domain symbol resource configuration being used — S202

Determine a first performance parameter of the current SRS time-domain resource configuration and a second performance parameter of each of the at least one candidate SRS time-domain resource configuration according to first measurement information — S204

In a case where at least one target SRS time-domain resource configuration exists in the at least one candidate SRS time-domain resource configuration, replace the current SRS time-domain resource configuration with one SRS time-domain resource configuration in the at least one target SRS time-domain resource configuration — S206

**Fig. 3**

Select an expression of an evaluation function according to different scenarios and system performance requirements — S302

Acquire a candidate cell SRS time-domain resource scheme set according to the available SRS symbols — S304

Acquire related measurement statistical information — S306

Calculate evaluation functions of various SRS time-domain resource schemes in the sets T1 and T2 — S308

Adjust the SRS time-domain resource, select the largest scheme from T2, or keeping the current SRS time-domain resource scheme — S310

**Fig. 4**

First acquisition unit — 402

Determination unit — 404

Replacement unit — 406

**Fig. 5**

| First acquisition unit | 402 |

| Determination unit | 404 |

| Replacement unit | 406 |

| Holding unit | 502 |

**Fig. 6**

| First acquisition unit | 402 |

| Determination unit | 404 |

| Replacement unit | 406 |

| Second acquisition unit | 602 |

**Fig. 7**

Third acquisition module
702

Determination module 704

402

Determination unit

404

Replacement unit

406

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015305027 A1

- CN 101500242 A